# FASCICULE DE BREVET EUROPEEN

(11) **EP 1 695 603 B1**
(45) Date de publication et mention de la délivrance du brevet: **29.03.2017**
(21) Numéro de dépôt: 06290302.6
(22) Date de dépôt: 22.02.2006
(51) Int. Cl.: A01B 73/04

(54) **Machine pour le travail ou le traitement d'une grande largeur de terrain**
Bodenbearbeitungs- und Bodenbehandlungsmaschine mit grosser Breite
Soil working and treating machine with large working width

(30) Priorité: 23.02.2005 FR 0501822
(43) Date de publication de la demande: 30.08.2006
(73) Titulaire: Etablissements Grégoire Besson et Cie, 49230 Montigne-sur-Moine (FR)
(72) Inventeur: Hundeby, Dave, Saskaton, SK S7K 3J7 (CA); Thirouin, Cyril, 91640 Briis sous Forges (FR)
(74) Mandataire: Laget, Jean-Loup

(56) Documents cités:
- EP-A- 1 008 286
- DE-A1- 19 716 801
- US-A- 4 867 245

## Description

La présente invention concerne d'une manière générale des machines agricoles destinées au travail ou au traitement du sol, portant des outils tels que disques, dents, socs ou semoirs, et plus spécialement de telles machines adaptées au travail de grandes largeurs de terrain, par exemple au moins égales à 8 mètres.

De telles machines sont connues de longue date, spécialement dans des pays tels que les Etats-Unis ou la Russie où les terrains à cultiver sont de grandes dimensions. Usuellement, elles sont constituées de plusieurs sections disposées les unes à côté des autres dans le sens de la largeur du travail, chaque section étant articulée sur la (ou les) section(s) voisine(s). Au cours du travail, la machine est déployée afin de traiter une grande largeur de terrain, puis, au cours du transport sur route, les sections latérales sont repliées et disposées verticalement de manière à réduire la dimension transversale de la machine.

L'adaptation de ces machines au marché français et plus généralement européen pose le problème de la circulation de ces machines sur route lors des déplacements entre la ferme et le ou les terrains à travailler. En effet, à la différence de certains pays étrangers, la législation impose pour la France et pour la plupart des pays européens que les engins circulant sur route respectent un gabarit imposé. Ces engins doivent généralement avoir une largeur inférieure à 3 mètres, parfois même inférieure à 2,55 mètres, et une hauteur inférieure à 4 mètres.

Une machine de ce type est par exemple décrite dans le WO 98/47344 (équivalent du DE 197 16 801) ou dans le EP 1 008 286.

Ces machines sont constituées de cinq sections : une section centrale portant deux sections latérales sur chacun de ses bords latéraux : une section latérale médiane articulée sur ladite section centrale et une section latérale d'extrémité articulée sur la section latérale médiane.

La section centrale peut porter des outils ou en être dépourvue.

Comme représenté dans ces documents, lors du transport sur route les sections latérales sont ramenées au-dessus de la section centrale. A cet effet, on fait pivoter les sections latérales d'extrémités sur 180° par rapport aux sections latérales médianes afin de les amener au-dessus desdites sections latérales médianes, puis on fait pivoter lesdites sections latérales médianes de 90° par rapport à la section centrale.

Dans cette position de transport, la poutre de la section centrale reste horizontale tandis que les poutres des sections latérales sont disposées, deux par deux, verticalement au-dessus de la poutre de la section centrale.

Les outils portés par les sections latérales d'extrémités sont positionnés en face les uns des autres dans l'espace séparant les deux groupes de poutres verticales et les outils des sections transversales médianes sont disposés de part et d'autre desdites poutres verticales, en direction de l'extérieur.

Il en résulte que la largeur de la machine repliée en position de transport est égale à quatre fois la hauteur des outils plus l'épaisseur des poutres des sections latérales. Dans la présente description, l'expression "hauteur d'outil" désigne la hauteur comprise entre la poutre qui le porte et son extrémité de travail, et l'expression "épaisseur de poutre" désigne l'encombrement vertical d'une poutre et des moyens qui sont disposés sur la face de celle-ci opposée aux outils, par exemple les têtes d'accrochage des outils, des moyens de relevage, etc.

En conséquence, lors de la conception d'une machine destinée à travailler sur de grandes largeurs de terrain, il est nécessaire de limiter la hauteur des outils en fonction de la largeur autorisée pour le transport sur route du fait que la hauteur des poutres est pratiquement imposée.
Cette limitation a pour conséquence de limiter le dégagement des pièces travaillantes des outils et donc les performances techniques de la machine du fait des risques de bourrage, d'une profondeur de travail peu importante, etc.

La présente invention tend à proposer une machine destinée à travailler de grandes largeurs de terrains qui est adaptée au transport sur route mais ne présente pas les inconvénients exposés ci-dessus.
A cet effet, l'invention concerne une machine pour le travail ou le traitement d'une grande largeur de terrain, avec les caractéristiques de la revendication 1.

La machine selon l'invention est encore remarquable en ce que :
- en position repliée de transport, les sections latérales d'extrémités sont positionnées avec leurs outils se faisant face,
- en position repliée de transport, les sections latérales médianes sont positionnées avec leurs outils faisant face aux outils des sections latérales d'extrémités,
- les outils sont positionnés en alternance dans la direction verticale, les uns au-dessus des autres, et/ou dans la direction axiale, les uns à la suite des autres dans la direction axiale de déplacement de la machine,
- les outils ne sont pas disposés symétriquement par rapport à l'axe médian CC, le énième outil à droite de l'axe médian CC étant écarté dudit axe médian CC d'une distance différente de celle séparant le énième outil à gauche dudit axe médian CC,
- les articulations entre les sections latérales médianes et les sections latérales d'extrémités ne sont pas disposées symétriquement par rapport à l'axe médian CC,
- pour une même rangée, les outils des sections latérales d'extrémités sont décalés axialement les uns par rapport aux autres.

L'invention sera mieux comprise grâce à la description qui va suivre donnée à titre d'exemple non limitatif en référence aux dessins annexés dans lesquels :
la figure 1 est une vue de l'arrière d'une machine suivant une première forme de réalisation de l'invention, en position dépliée de travail,
la figure 2 est une vue de l'arrière de la machine de la figure 1 en position repliée de transport sur route,
la figure 3 est une vue semblable à la figure 1 pour une machine suivant une deuxième forme de réalisation de l'invention,
la figure 4 est une vue de l'arrière de la machine suivant une deuxième forme de réalisation de l'invention, au cours du pliage et
la figure 5 est une vue de dessus d'un exemple de réalisation de la machine suivant la deuxième forme de réalisation,
la figure 6 est une vue de l'arrière d'une machine suivant une troisième forme de réalisation de l'invention, en position dépliée de travail,
la figure 7 est une vue de l'arrière de la machine de la figure 6 au cours du pliage,
la figure 8 est une vue de l'arrière de la machine de la figure 6 en position repliée de transport sur route.

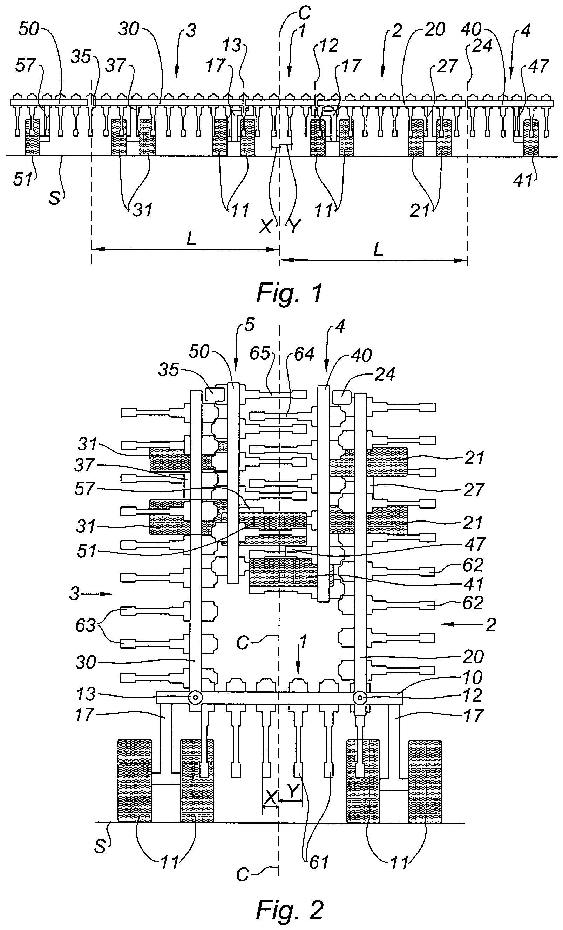

Les figures 1 et 2 montrent une machine suivant une première forme de réalisation de l'invention, vue de l'arrière, respectivement en position dépliée de travail et en position pliée de transport.

Ladite machine est destinée à travailler ou traiter une grande largeur de terrain, à cet effet elle est constituée d'une section centrale 1, de deux sections latérales médianes 2 et 3 de largeur L et de deux sections latérales d'extrémités 4 et 5.

Les sections latérales médianes 2, 3 sont articulées de part et d'autre de ladite section centrale 1, sur les bords latéraux de celle-ci, respectivement par les articulations 12 et 13.

Les sections latérales d'extrémités 4, 5 sont articulées de part et d'autre des sections latérales médianes 2, 3, sur les bords latéraux externes de celles-ci, respectivement par les articulations 24 et 35.

Des moyens de type connu, tels que des vérins hydrauliques non représentés au dessin, permettent le basculement des sections les unes par rapport aux autres lors du pliage de la machine en vue d'une circulation sur route et du dépliage de celle-ci.

Chaque section 1 à 5 est équipée d'au moins une poutre 10, 20, 30, 40, 50 portant des outils, respectivement 61, 62, 63, 64, 65, destinés au travail ou au traitement du sol et est équipée de roues 11,21,31,41,51.

Suivant une variante de réalisation non représentée au dessin, la section 1 centrale ne porte pas d'outils.

Chaque outil est de préférence un outil de pénétration dans le sol constitué à chaque fois au moins d'un étançon et d'une pièce d'usure telle que soc, lame, coutre ou dent.

Sur l'exemple de réalisation représenté au dessin, la section centrale 1 est équipée de deux paires de roues 11 disposées près des extrémités latérales de la poutre 10, les sections latérales médianes 2, 3 sont chacune équipée d'une paire de roues 21, 31 et les sections latérales d'extrémités 4, 5 sont chacune équipée d'une roue 41, 51.

Comme visible à la figure 1, les roues sont régulièrement réparties le long de la machine de manière à supporter le poids de celle-ci et à répartir la force d'appui au sol S.

Lesdites roues 11 à 51 sont portées par des moyens de montage 17 à 57 montés basculants sur les poutres 10 à 50 de manière à pouvoir régler la hauteur desdites poutres par rapport au sol S.

Dans la position représentée à la figure 1, lesdites poutres 10 à 50 sont en position dite haute pour laquelle les outils sont écartés du sol. Cette position est utilisée pour les manoeuvres en bout de champ.

En basculant lesdits moyens de montage 17 à 57 des roues 61 à 65 par rapport aux poutres 10 à 50, on rapproche les outils du sol puis on les fait pénétrer dans le sol de la hauteur nécessaire au travail envisagé.

Lors du travail, la machine est en position dépliée, figure 1, les sections de celle-ci s'étendant globalement horizontalement dans un même plan. Lesdites sections sont globalement dans un même plan horizontal lorsque le terrain est plat et sont libres de se déplacer angulairement les unes par rapport aux autres pour suivre les ondulations du terrain.

Lors du pliage de la machine en vue de son transport sur route :
- la machine est relevée en position haute, figure 1,
- les sections latérales d'extrémités 4, 5 sont entraînées en rotation autour des articulations 24, 35 et amenées en position horizontale au-dessus des sections latérales médianes 2, 3,
- les sections latérales médianes 2, 3 sont entraînées en rotation autour des articulations 12, 13 et amenées en position verticale au-dessus de la section centrale 1,
- les roues 21, 41, 31, 51 sont ramenées en position basse tandis que les roues 11 sont laissées en position haute.

Dans la position repliée de la machine, deux sections latérales, ici les sections latérales d'extrémités 4, 5 sont positionnées verticalement au-dessus de la section centrale 1 avec leurs outils 64, 65 se faisant face.

De manière connue en soi, les articulations 12, 13 ne sont pas positionnées aux extrémités latérales de la poutre 10 mais à distance desdites extrémités. La distance séparant lesdites articulations 12, 13 des extrémités latérales de la poutre 10 est telle que la distance entre les extrémités des outils 62, 63 des sections latérales médianes 2, 3 respecte le gabarit routier.

Selon l'invention, comme visible à la figure 2, les poutres 40, 50 sont, dans leur position verticale repliée, écartées l'une de l'autre d'une distance supérieure à la hauteur d'un outil mais inférieure à deux fois la hauteur d'un outil.

Il en résulte que dans la position repliée de transport sur route de la machine représentée à la figure 1, les outils 64, 65 d'une section latérale d'extrémité 4, 5 sont insérés dans des espaces libres séparant les outils 65, 64 de l'autre section latérale d'extrémité 5, 4.

Les sections latérales sont formée d'au moins un bâti du type poutre portant des outils décalés axialement dans le sens avant-arrière pris dans le sens de déplacement de la machine pour délimiter une pluralité de rangées d'outils.

Comme représenté au dessin, lorsque l'on regarde une machine de travail ou de traitement du sol à partir de l'arrière, les outils sont régulièrement répartis sur toute la largeur de celle-ci.

Dans les machines actuellement mises en oeuvre, lesdits outils sont de plus répartis symétriquement par rapport à l'axe médian CC de la machine.

Pour la machine selon l'exemple de réalisation représenté aux figures 1 et 2, les outils ne sont pas disposés symétriquement par rapport à l'axe médian CC de la machine. Le premier outil disposé à gauche de l'axe médian CC est à la distance X de ce dernier, tandis que le premier outil disposé à droite dudit axe médian CC est à la distance Y.

En choisissant X différent de Y, les outils sont décalés latéralement.

Dans l'exemple de réalisation représenté au dessin, X est inférieur à Y. Il en résulte que le énième outil à droite de l'axe médian CC est plus éloigné dudit axe médian que le énième outil à gauche.

En conséquence, lors du pliage de la machine en vue de son transport sur route, figure 2, les outils 64 de la section latérale d'extrémité 4 sont respectivement disposés en-dessous des outils 65 de la section latérale d'extrémité 5.

Lorsque l'on voit depuis l'arrière la machine en position repliée, lesdits outils d'une section latérale d'extrémité sont insérés entre les outils de l'autre section latérale qui leur font face en étant positionnés en alternance dans le sens vertical ce qui crée un chevauchement par superposition desdits outils.

Par cette disposition selon l'invention, la largeur de la machine repliée est égale à quatre épaisseurs de poutre plus entre trois et quatre fois la hauteur des outils. De préférence, le chevauchement entre les outils se faisant face est d'au moins un tiers de la hauteur d'un outil.

Dans l'exemple de réalisation représenté au dessin, les outils se chevauchent quasiment sur toute leur hauteur de sorte que la largeur de la machine en position repliée est réduite d'environ une hauteur d'outil par rapport aux machines connues telles que celle représentée dans le WO 98/47344.

Il en résulte que pour une largeur en position repliée déterminée par le Code de la Route, la machine selon l'invention peut être équipée d'outils de hauteur supérieure aux outils usuellement mis en oeuvre dans ce type de machine.

La machine selon l'invention est alors plus efficace du fait de la diminution des risques de bourrage, de l'augmentation de la profondeur de travail, etc.

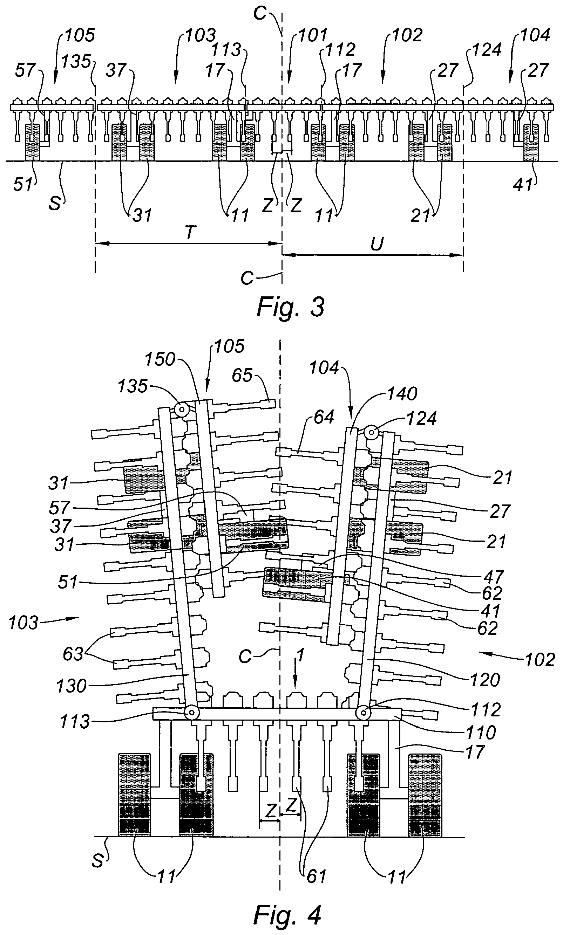

Pour la machine selon le second exemple de réalisation représentée aux figures 3 à 5, les outils sont disposés symétriquement par rapport à l'axe médian CC de la machine comme dans les machines connues, les deux outils disposés de part et d'autre de l'axe médian CC sont à la même distance Z de celui-ci. Par contre, les articulations 124 et 135 entre les sections latérales médianes 102, 103 et les sections latérales d'extrémités 104, 105 ne sont pas disposées symétriquement par rapport audit axe médian CC.

Dans l'exemple de réalisation représenté au dessin, l'articulation 135 est disposée à la distance T de l'axe médian CC tandis que l'articulation 124 est disposée à la distance U, inférieure à T, dudit axe médian.

Par cette disposition, lors du pliage de la machine en vue de son transport sur route, figure 4, les outils 64 de la section latérale d'extrémité 104 sont respectivement disposés en-dessous des outils 65 de la section latérale d'extrémité 105.

Lesdits outils sont ainsi alternés dans le sens vertical.

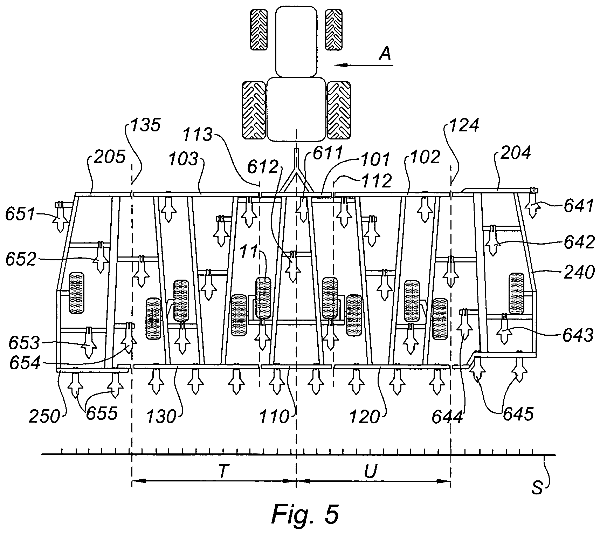

La figure 5 est une vue de dessus d'un attelage comportant une machine selon l'invention attelée à un tracteur A.

Ladite machine est réalisée suivant le deuxième exemple de réalisation de l'invention des figures 3 et 4 dans lequel les articulations 124, 135 ne sont pas disposées symétriquement par rapport à l'axe médian.

De manière connue en soi, les machines de travail ou de traitement du sol comportent usuellement plusieurs rangées d'outils disposées axialement les unes à la suite des autres dans le sens d'avancement de l'attelage. Par cette disposition, des outils vus les uns à côté des autres lorsque la machine est regardée de l'arrière sont disposés axialement à distance les uns des autres. Il est ainsi possible de proposer des machines portant un grand nombre d'outils dans le sens transversal et permettant un travail ou un traitement de la terre dans des sillons très rapprochés les uns des autres.

Dans les machines connues, les outils d'une même rangée sont disposés sur une même ligne transversale.

Dans l'exemple de réalisation de l'invention, les outils des sections latérales d'extrémités 204, 205 sont décalés axialement les uns par rapport aux autres.

Dans l'exemple représenté à la figure 5, les outils 641, 642, 643, 644 et 645 de la section latérale d'extrémité 204 sont respectivement axialement devant, dans le sens d'avancement de l'attelage, les outils 651, 652, 653, 654 et 655 de la section latérale d'extrémité 205.

Comme visible au dessin, les poutres 240, 250 sont à cet effet de formes différentes.

Cette disposition permet de favoriser encore l'insertion des outils portés par une section latérale dans des espaces libres séparant les outils de l'autre section latérale leur faisant face lorsque la machine est repliée. En effet, lesdits outils peuvent ainsi être positionnés en alternance tant dans la direction verticale, les uns au-dessus des autres, en formant un chevauchement par superposition des outils, que dans la direction axiale, les uns à la suite des autres dans la direction axiale de déplacement de la machine, en formant un chevauchement par juxtaposition des outils.

Bien que non représenté au dessin, un tel décalage axial des outils des sections latérales d'extrémités peut également être mis en oeuvre avec profit pour les machines suivant la première forme de réalisation de l'invention.

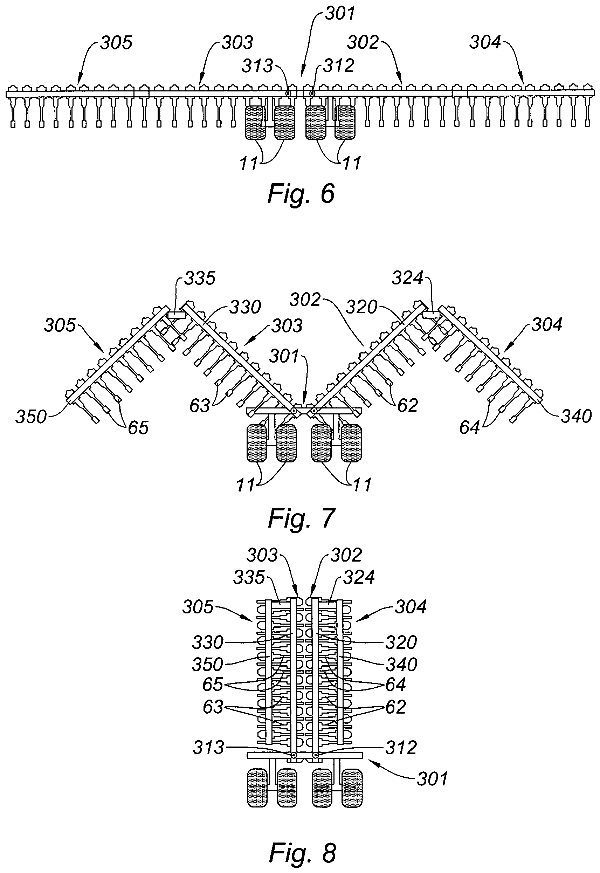

Les figures 6 à 8 montrent une machine suivant une autre forme de réalisation de la présente invention dans laquelle les sections latérales 302, 303 sont articulées sur la section centrale 301 en des points d'articulation 312, 313 proches l'un de l'autre et positionnés près du centre de la poutre 310 de ladite section centrale 301.

Dans la réalisation représentée au dessin, seule la section centrale 301 porte des roues 11. En variante, au moins certaines des sections latérales portent des roues ou des rouleaux.

Les sections latérales d'extrémités 304, 305 sont raccordées aux sections latérales médianes 302, 303 par des biellettes de liaison 324, 335.

Dans cette forme de réalisation, la configuration de la machine en position pliée de transport est différente de celle décrite ci-dessus. Comme visible aux figures 7 et 8, les poutres 320, 330 des sections latérales médianes 302, 303 s'étendent perpendiculairement à la poutre 310 de la section centrale 301 en étant positionnées l'une à côté de l'autre et les poutres 340, 350 des sections latérales d'extrémités 304, 305 sont disposées de part et d'autre desdites poutres 320, 330, près des faces latérales de la machine.

Dans la position repliée de la machine, deux couples de sections latérales, ici chaque section latérale médiane 302, respectivement 303, avec chaque section latérale d'extrémité 304, respectivement 305, sont positionnées verticalement au-dessus de la section centrale 301 avec leurs outils 62, 64, respectivement 63, 65 se faisant face.

Selon l'invention, comme visible à la figure 8, les poutres 320, 340, respectivement 330, 350 sont, dans leur position verticale repliée, écartées l'une de l'autre d'une distance supérieure à la hauteur d'un outil mais inférieure à deux fois la hauteur d'un outil.

Il en résulte que dans la position repliée de transport sur route de la machine représentée à la figure 6, les outils 64, 65 d'une section latérale d'extrémité 304, 305 sont insérés dans des espaces libres séparant les outils 62, 63 d'une section latérale médiane 302, 303.

D'une manière générale, il est possible de proposer une machine selon l'invention spécialement adaptée à des conditions de travail déterminées en combinant la disposition asymétrique des outils par rapport à l'axe médian CC, la position asymétrique des articulations entre les sections latérales et le décalage axial des outils des sections latérales d'extrémités.

## Revendications

1. Machine pour le travail ou le traitement d'une grande largeur de terrain, constituée d'une section centrale (1, 101, 301), de deux sections latérales médianes (2, 3 ; 102, 103 ; 302, 303) articulées sur ladite section centrale (1, 101, 301) et de deux sections latérales d'extrémités (4, 5 ; 104, 105 ; 204, 205 ; 304, 305) articulées de part et d'autre desdites sections latérales médianes (2, 3 ; 102, 103 ; 302, 303), chaque section étant globalement constituée d'une poutre (10, 20, 30, 40, 50 ; 110, 120, 130, 140, 150 ; 240, 250 ; 310, 320, 330, 340, 350) et certaines desdites poutres portant des outils (61, 62, 63, 64, 65), lesdites sections étant déplaçables en rotation les unes par rapport aux autres entre un état déplié de travail de la machine dans laquelle lesdites sections s'étendent globalement horizontalement dans un même plan, et, une position repliée de transport de la machine, dans laquelle les sections latérales (2-4, 3-5 ; 102-104 , 103-105 ; 102-204 ; 103-205 ; 302, 304 ; 303, 305) sont disposées, deux par deux, verticalement au-dessus de la section centrale (1, 101, 301), deux au moins des sections latérales (4, 5 ; 104, 105 ; 204, 205 ; 302, 304 ; 303, 305) étant positionnées avec leurs outils (64, 65 ; 62, 64 ; 63, 65) se faisant face, chaque outil (64, 65 ; 62, 64 ; 63, 65) étant un outil de pénétration dans le sol constitué au moins d'un étançon et d'une pièce d'usure, les poutres (40, 50 ; 140, 150 ; 240, 250 ; 320, 340 ; 330, 350) des sections latérales dont les outils se font face étant, dans leur position verticale
repliée, écartées l'une de l'autre d'une distance supérieure à la hauteur d'un outil mais inférieure à deux fois la hauteur d'un outil, les outils (64, 65, 62, 63) d'une section latérale (4, 5 ; 104, 105 ; 204, 205 ; 302, 303) étant insérés dans des espaces libres séparant les outils (65, 64, 64, 65) de l'autre section latérale (5, 4 ; 105, 104 ; 205, 204 ; 304, 305) leur faisant face, et **caractérisé en ce que**, pour une même rangée, les outils des sections latérales d'extrémités (204, 205) sont décalés axialement les uns par rapport aux autres.

2. Machine selon la revendication 1,
**caractérisée en ce que** en position repliée de transport, les sections latérales d'extrémités (4, 5 ; 104, 105 ; 204, 205) sont positionnées avec leurs outils se faisant face.

3. Machine selon la revendication 1,
**caractérisée en ce que** en position repliée de transport, les sections latérales médianes (302, 303) sont positionnées avec leurs outils faisant face aux outils des sections latérales d'extrémités (304, 305).

4. Machine selon l'une quelconque des revendications 1 à 3,
**caractérisée en ce que** les outils sont positionnés en alternance dans la direction verticale, les uns au-dessus des autres, et dans la direction axiale, les uns à la suite des autres dans la direction axiale de déplacement de la machine.

5. Machine selon l'une quelconque des revendications 1 à 4,
**caractérisée en ce que** les outils ne sont pas disposés symétriquement par rapport à l'axe médian CC, le énième outil à droite de l'axe médian CC étant écarté dudit axe médian CC d'une distance différente de celle séparant le énième outil à gauche dudit axe médian CC.

6. Machine selon l'une quelconque des revendications 1 à 4,
**caractérisée en ce que** les articulations (124, 135) entre les sections latérales médianes (102, 103) et les sections latérales d'extrémités (104, 105) ne sont pas disposées symétriquement par rapport à l'axe médian CC.

7. Machine selon l'une quelconque des revendications 1 à 6,
**caractérisée en ce que** les outils de l'une des sections latérales d'extrémités (204, 205) sont respectivement axialement devant, dans le sens d'avancement de l'attelage, les outils de l'autre des sections latérales d'extrémité (204,205).

## Patentansprüche

1. Bodenbearbeitungs- oder -behandlungsmaschine mit großer Breite, bestehend aus einem zentralen Sektor (1, 101, 301), zwei mittleren seitlichen Sektoren (2, 3; 102, 103; 302, 303), die an dem zentralen Sektor (1, 101, 301) angelenkt sind, und zwei seitlichen Endsektoren (4, 5; 104, 105; 204, 205; 304, 305), die auf der einen und der anderen Seite der mittleren seitlichen Sektoren (2, 3; 102, 103; 302, 303) angelenkt sind, wobei jeder Sektor global von einem Balken (10, 20, 30, 40, 50; 110, 120, 130, 140, 150; 240, 250; 310, 320, 330, 340, 350) und einigen Balken, die Werkzeuge (61, 62, 63, 64, 65) tragen, gebildet ist, wobei die Sektoren in Bezug zueinander zwischen einem ausgeklappten Arbeitszustand der Maschine, in welchem sich die Sektoren global horizontal in einer selben Ebene erstrecken, und einer eingeklappten Transportposition der Maschine, in welcher die seitlichen Sektoren (2-4, 3-5; 102-104, 103-105; 102-204; 103-205; 302, 304; 303, 305) paarig vertikal über dem zentralen Sektor (1, 101, 301) angeordnet sind, rotierend verlagerbar sind, wobei sich mindestens zwei der seitlichen Sektoren (4, 5; 104, 105; 204, 205; 302, 304; 303, 305) mit ihren Werkzeugen (64, 65; 62, 64; 63, 65) gegenüberstehen,
wobei jedes Werkzeug (64, 65; 62, 64; 63, 65) ein Bodeneindringwerkzeug ist, gebildet aus mindestens einer Stütze und einem Verschleißteil, wobei die Balken (40, 50; 140, 150; 240, 250; 320, 340; 330, 350) der seitlichen Sektoren, deren Werkzeuge sich gegenüberstehen, in ihrer vertikalen eingeklappten vertikalen Position voneinander in einem Abstand beabstandet sind, der größer als die Höhe eines Werkzeugs, aber kleiner als zwei Mal die Höhe eines Werkzeugs, ist, wobei die Werkzeuge (64, 65, 62, 63) eines seitlichen Sektors (4, 5; 104, 105; 204, 205; 302, 303) in freie Räume eingesetzt sind, welche die Werkzeuge (65, 64, 64, 65) des anderen seitlichen Sektors (5, 4; 105, 104; 205, 204; 304, 305) ihnen gegenüber trennen, **dadurch gekennzeichnet, dass** für eine selbe Reihe die Werkzeuge der seitlichen Endsektoren (204, 205) axial zueinander versetzt sind.

2. Maschine nach Anspruch 1,
**dadurch gekennzeichnet, dass** die seitlichen Endsektoren (4, 5; 104, 105; 204, 205) in eingeklappter Transportposition mit ihren Werkzeugen gegenüber positioniert sind.

3. Maschine nach Anspruch 1,
**dadurch gekennzeichnet, dass** in eingeklappter Transportposition die mittleren seitlichen Sektoren (302, 303) mit ihren Werkzeugen gegenüber den Werkzeugen der seitlichen Endsektoren (304, 305) positioniert sind.

4. Maschine nach einem der Ansprüche 1 bis 3,
**dadurch gekennzeichnet, dass** die Werkzeuge in der vertikalen Richtung alternierend übereinander und/oder in der axialen Richtung nacheinander in axialer Verlagerungsrichtung der Maschine positioniert sind.

5. Maschine nach einem der Ansprüche 1 bis 4,
**dadurch gekennzeichnet, dass** die Werkzeuge in Bezug auf die Mittelachse CC nicht symmetrisch angeordnet sind, wobei das x-te Werkzeug rechts der Mittelachse CC von der Mittelachse CC in einem Abstand beabstandet ist, der sich von dem unterscheidet, der das x-te Werkzeug links von der Mittelachse CC trennt.

6. Maschine nach einem der Ansprüche 1 bis 4,
**dadurch gekennzeichnet, dass** die Gelenke (124, 135) zwischen den mittleren seitlichen Sektoren (102, 103) und den seitlichen Endsektoren (104, 105) in Bezug zur Mittelachse CC nicht symmetrisch angeordnet sind.

7. Maschine nach einem der Ansprüche 1 bis 4,
**dadurch gekennzeichnet, dass** die Werkzeuge eines der seitlichen Endsektoren (204, 205) in Vorschubrichtung der Kopplung jeweils axial vor den Werkzeuge des anderen der seitlichen Endsektoren (204, 205) sind.

## Claims

1. A soil working and treating machine with a large working width, made up of a central section (1, 101, 301), two median side sections (2, 3; 102, 103; 302, 303) articulated on said central section (1, 101, 301) and two end side sections (4, 5; 104, 105; 204, 205; 304, 305) articulated on either side of said median side sections (2, 3; 102, 103; 302, 303), each section being globally made up of a beam (10, 20, 30, 40, 50; 110, 120, 130, 140, 150; 240, 250; 310, 320, 330, 340, 350) and some of said beams bearing tools (61, 62, 63, 64, 65), said sections being rotatable relative to one another between an unfolded working state of the machine in which said sections extend globally horizontally in a same plane, and a folded transport position of the machine, in which the side sections (2-4, 3-5; 102-104, 103-105; 102-204; 103-205; 302, 304; 303, 305) are arranged, in pairs, vertically above the central section (1, 101, 301), at least two of the side sections (4, 5; 104, 105; 204, 205; 302, 304; 303, 305) being positioned with their tools (64, 65; 62, 64; 63, 65) facing one another,
each tool (64, 65; 62, 64; 63, 65) being a tool for penetrating the soil made up at least of a disc leg and a wearing part, the beams (40, 50; 140, 150; 240, 250; 320, 340; 330, 350) of the side sections whereof the tools face one another being, in their bent vertical position, separated from one another by a distance greater than the height of a tool, but less than twice the height of a tool, the tools (64, 65, 62, 63) of a side section (4, 5; 104, 105; 204, 205; 302, 303) being inserted in free spaces separating the tools (65, 64, 64, 65) from the other side section (5, 4; 105, 104; 205, 204; 304, 305) facing them, and **characterized in that**, for a same row, the tools of the end side sections (204, 205) are axially offset relative to one another.

2. The machine according to claim 1,
**characterized in that** in the folded transport position, the end side sections (4, 5; 104, 105; 204, 205) are positioned with their tools facing one another.

3. The machine according to claim 1,
**characterized in that** in the folded transport position, the median side sections (302, 303) are positioned with their tools facing the tools of the end side sections (304, 305).

4. The machine according to any one of claims 1 to 3,
**characterized in that** the tools are positioned alternating in the vertical direction, above one another, and/or in the axial direction, following one another in the axial movement direction of the machine.

5. The machine according to any one of claims 1 to 4,
**characterized in that** the tools are not arranged symmetrically relative to the median axis CC, the n^{th} tool to the right from the median axis CC being separated from said median axis CC by a distance different from that separating the n^{th} tool to the left from said median axis CC.

6. The machine according to any one of claims 1 to 4,
**characterized in that** the articulations (124, 135) between the median side sections (102, 103) and the end side sections (104, 105) are not arranged symmetrically relative to the median axis CC.

7. The machine according to any one of claims 1 to 6,
**characterized in that** the tools of one of the end side sections (204, 205) are respectively axially in front, in the direction of advance of the hitch, of the tools of the other end side sections (204, 205).
